# EUROPEAN PATENT APPLICATION

(11) **EP 1 383 358 A1**
(43) Date of publication of application: **21.01.2004**
(21) Application number: 03253949.6
(22) Date of filing: 23.06.2003
(51) Int. Cl.: H05B 41/00

(54) **Safety output device of electronic ballast**

(30) Priority: 21.06.2002 CN 02271214
(71) Applicant: Huang, Tian Zi, Guangzhou, Guangdong (CN)
(72) Inventor: Huang, Tian Zi, Guangzhou, Guangdong (CN)
(74) Representative: Powell, Timothy John

(57) **Abstract**

The present invention discloses a safety output device of electronic ballast, which includes isolating transformer, relay, control circuit and induction circuit controlling relay. Two output terminals of electronic ballast connect to the safety output device. The alternation between the functions of relay is controlled by means of induction circuit to trigger control circuit; when the lamp is not plugged into the load circuit, low voltage below safe voltage of human body will be applied to both output terminals of the safety output device, and when the lamp is plugged into the load circuit, voltage applied to both output terminals of the safety output device will change to the high frequency high voltage output by electronic ballast, thus making the loaded circuit in normal operation. The electronic ballast in accordance with the present invention may ensure, under any circumstances, the safety voltage is output from both output terminals of electronic ballast while the load of lamp is not present.

## Description

### BRACKGROUND OF THE INVENTION

### Field of the invention

The present invention relates to a safety output device of electronic ballast.

### Description of the Related Art

Electronic ballasts are extensively publicized because they are significantly more energy efficient and less in weight; nevertheless, in the course of utilization, ordinary electronic ballasts yield high output voltage at the output terminals surpassing the safety limit of human body despite the device are under inoperative mode and not loaded with lamp. Particularly during installation of high power detachable electronic energy saving lamp, for example, sizable lamp of E39, E40, and etc., accident of bodily injury or even death is very easy to be happened especially when working high above ground, and people may fall down because of electric shock. Electric shock will most likely occur while bare hands come into contact with the terminals of lamp socket. Consequently, the present invention innovates a safety output device for the electronic ballasts wherein casualty of electric shock can be virtually eradicated by means of insolating transformer, relay, and induction circuit.

### Summary of The Present Invention

An object of the present invention is to provide a safety output device of electronic ballast, which can ensure that two output terminals of the electronic ballast provide a safety voltage limit under the conditions of without loading a lamp to the electronic ballast, or in any circumstances. In accordance with the present invention, this object is accomplished through the following technical solution: the safety output device includes an insolating transformer B, a relay J1, a control circuit and an induction circuit controlling the relay J1; the primary winding of the transformer (B) connects to the input terminal of electronic ballast, the secondary winding B-2 of transformer B supplies low voltage direct current source through the rectification diodes D1-D4, electrolytic capacitor C1, current source input terminal of control circuit connects to anode of low voltage direct current source, output terminal of control circuit connects to the coil of relay J1, another side of relay's J1 coil connects to cathode of low voltage direct current source; input terminal of control circuit connects to the output terminal G2 of the device through the normal-open contact J1-b of relay J1; the said induction circuit is composed of inductive transformer T1, diode D5 and electrolytic capacitor C3, one terminal of primary winding T1-1 of the inductive transformer T1 connects with the output terminal G2 of the device through the normal-close contact J1-d of relay J1, another terminal of primary winding T1-1 connects to one of the output terminal of the electronic ballast; one terminal of secondary winding T1-2 of the inductive transformer T1 connects to cathode of low voltage direct current source, another terminal thereof connects to the input terminal of control circuit through diode D5, electrolytic capacitor C3 is connected between the input terminal of control circuit and cathode of low voltage direct current source; anode of low voltage direct current source connects to the output terminal G1 of the device through the normal-open contact J1-a of relay J1; normal-close contact J1-c of the relay J1 is connected between the device's output terminal G1 of the device and another output terminal of electronic ballast. Two output terminals BL1, BL2 of electronic ballast are connected to the safety output device. While the circuit is not loaded with lamp, two output terminals G1, G2 of safety output device present low voltage which is below the safe voltage of human body. While the circuit is loaded with lamp, due to function alternation of relay J1, two output terminals G1, G2 of the safety output device are changed to high frequency high voltage output of electronic ballast in order to enable the lamp loaded circuit to operate normally.

In accordance with the present invention, control circuit which controls relay J1 composed of transistors Q1, Q2, resistor R1 and electrolytic capacitor C2. Collector c of transistor Q1 is connected with anode of low voltage direct current source, and emitter e thereof is the output terminal of the circuit connecting to the coil of relay J1. Resistor R1 is connected to collector c of transistor Q2. Node X is connected to base b of transistor Q1. Electrolytic capacitor C2 is connected between the base b of transistor Q1 and cathode of low voltage direct current source. Emitter e of transistor Q2 is connected to cathode of low voltage direct current source. The base b thereof becomes the output terminal of the circuit.

In accordance with the present invention the control circuit controlling relay J1 is composed of comparator IC, resistors R1, R2, R3 and electrolytic capacitor C2. Anode and cathode of the comparator IC arc connected to the anode and cathode of direct current low voltage source respectively. Output terminal of comparator IC is the output terminal of the circuit connects to relay's J1 coil. Output terminal of comparator IC is respectively connected to anode and cathode of the direct current low voltage source through resistor R3, electrolytic capacitor C2. Resistors R1, R4 is in series connected between anode and cathode of direct current low voltage source. Reference voltage input terminal of comparator IC is connected to resistors R1, R4 at node Y; sampling voltage input terminal of comparator IC is the input terminal of the circuit.

As a further improvement of the present invention, relay J2 is in parallel connected between anode and cathode of the low voltage direct current source. Normal-open contact J2-a thereof is connected between the normal-close contact J1-c of relay J1 and output terminal G1 of the device; another normal-open contact J2-b of relay J2 is connected between the normal-close contact J1-d of relay J1 and output terminal G2 of the device.

As a further improvement of the present invention, stabilivolt DZ or voltage division resistor R2 is connected between said anode of low voltage direct current source and normal-open contact J1-a of relay J1.

At the time of inputting alternating current to the electronic ballast while the lamp not to be loaded in the loading circuit, relay J1 is closed by transistor Q1, so that the connection between both output terminals BL1, BL2 of electronic ballast and both output terminals G1, G2 of the device is cut off, in the mean time, anode of low voltage source is safely separated from the output terminal G1 of the device through the normal-open contact J1-a of relay J1. The base b of transistor Q2 adjoins the output terminal G2 of the device through the other normal-open contact J1-b of relay J1, whereby making voltage existed between the output terminalG1 and G2 to be much less that the safe voltage of human body. At this point, human body does not sense the presence of voltage even if the output terminals G1, G2 are contacted by human body at the same time, thus ensuring the safety of human body. However after the lamp is loaded, safe low voltage source conducts transistor Q2 through the output terminal G1, loading of lamp, output terminal G2, the base b of transistor Q2, cuts off transistor Q1, releases relay J1, thus cutting off the connection of anode of low voltage source and output terminal G1, as well as the connection of output terminal G2 and base b of transistor Q2. In the mean time, a resonant circuit is established through the connection of output terminal BL1 of electronic ballast, output terminal G1, loading of lamp, output terminal G2 and another output terminal BL2 of electronic ballast, whereby keeping the electronic ballast and lamp loaded circuit in normal operation. Simultaneously, induction circuit provides induction direct current voltage for the base b of transistor Q2, in order to make the transistor Q2 under the state of continuous conduction. Hence, during no load of lamp, or in any circumstances, both output terminals of electronic ballast do not supply voltage over the safe voltage of human body, while when loaded with lamp, it is able to ensure the loading of lamp under operation condition, thus accomplishing safety usage of energy saving electronics lighting, and making sure of safety of human body.

### Brief Description of the Drawings

Some exemplary embodiments of the present invention will be in detail described below in connection with the accompanying drawings, in which:
Figure 1 is a schematic diagram of electric circuit showing the first example of the present invention.
Figure 2 is a schematic diagram of electric circuit showing the second example of the present invention.
Figure 3 is a schematic diagram of electric circuit showing the third example of the present invention.
Figure 4 is a schematic diagram of electric circuit showing the fourth example of the present invention.
Figure 5 is a schematic diagram of electric circuit showing the fifth example of the present invention.

### Detailed Description of the Invention

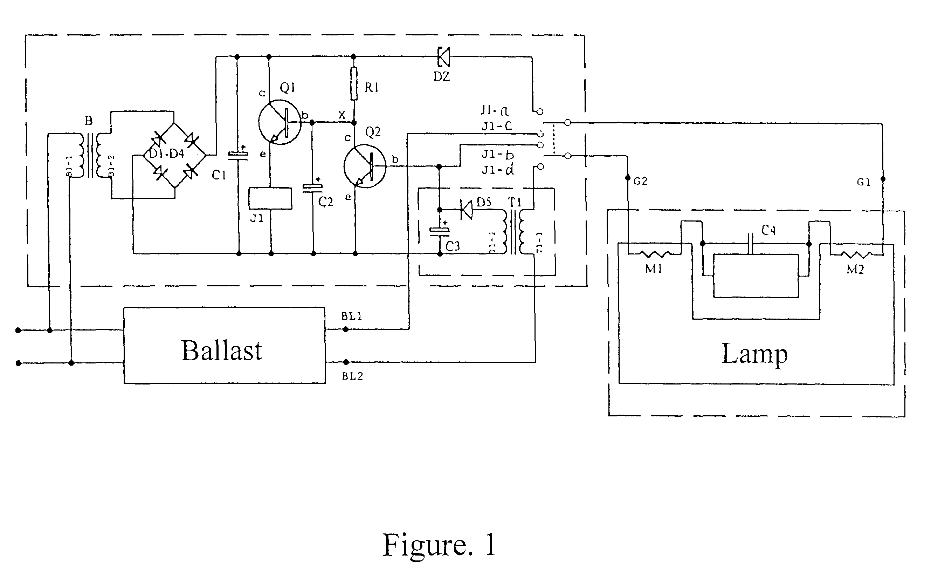

As shown in Fig. 1, secondary B 1-2 of isolating transformer B is connected to anode of direct current low voltage source through rectification diodes D1-D4, electrolytic capacitor C1 in order for processing rectification filtration, and collector c of transistor Q1. Emitter e connects to one terminal of relay's J1 coil, and another terminal thereof connects to cathode of direct current low voltage source. Resistor R1 connects to collector c of transistor Q2 via node X and to base b of transistor Q1. Electrolytic capacitor C2 is connected between the base b of transistor Q1 and cathode of direct current low voltage source, in order for causing the delay-action. Direct current low voltage source connects to the output terminal G1 of the device through anode of stabilivolt DZ, and normal-open contact J1-a of relay J1, and output terminal BL1 of electronic ballast connects to the output terminal G1 of the device through normal-close contact J1-c of relay. Base b of transistor Q2 connects to output terminal G2 of the device through normal-open contact J1-b of relay J1. Another terminal BL2 of electronic ballast connects to another output terminal G2 of the device through the primary T1-1 of inductive transformer T1, and the normal-close contact J1-d of relay J1. One terminal of secondary T1-2 of inductive transformer T1 connects to cathode of direct current low voltage source, and another one connects to the base b of transistor Q2 through diode D5. Electrolytic capacitor C3 is connected between the base b of transistor Q2 and cathode of direct current low voltage source, in order for causing the delay-action.

When alternating-current power supply is applied to primary coil B-1 of isolating transformer B, secondary coil of isolating transformer B outputs low alternating current voltage, whereby building up direct current low voltage source which is below the safe voltage limit of human body through rectification diodes D1-D4 and electrolytic capacitor C1. At this point, if the circuit has no load of lamp, both of the output terminals G1, G2 of the device are under the state of open circuit, transistor Q1 is conducted by inputting high potential through resistor R1, and relay J1 is closed. The normal-close contact J1-c of relay J1 cuts off the connection of output terminal BL1 of electronic ballast and output terminal G1 of the installation. The other normal-close contact J1-d of relay J1 cuts off the connection of another output terminal BL2 of electronic ballast and another output terminal G2 of the device. Anode of direct current low voltage source connects to the base b of the transistor Q2 through the normal-open contact J1-b of the already closed relay J1 . Hence, direct current source exists between both of the output terminal G1, G2 of the device to be much less than the safe voltage of human body, even if hands are directly in contact with both of the output terminals G1, G2, feeling of electric shock does not exist, thus ensuring safe usage of electronic ballast under any circumstance.

Having been loaded with lamp, a high potential at the base b of transistor Q2 is introduced by anode of direct current low voltage source through stabilivolt DZ, normal-open contact J1-a of relay J1, output terminal G1 of the device, lamp filament M2, preheat circuit, lamp filament M1, another output terminal G2 of the device, normal-open contact J1-b of relay J1. So transistor Q2 is conducted, and the base of transistor Q1 is changed from high potential to low potential. Transistor Q1 is cut off, and relay J1 is released. In this instance, a resonant circuit is established through the connection of output terminal BL1 of electronic ballast, the normal-close contact J1-c of relay J1, output terminal G1 of the device, lamp filament M2, resonant capacitor C4, lamp filament M1, output terminal G2 of the device, normal-close contact J1-d of relay J1, primary T1-1 of inductive transformer T1, and another output terminal BL2 of electronic ballast, whereby keeping lamp loading circuit in normal operation. Due to formation of resonance of electronic ballast, high frequency induction voltage is built up at the secondary T1-2 of inductive transformer T1, while the base b of transistor Q2 is continuously kept at high potential through diode D5 and electrolytic capacitor C3 in order for continuously keeping the transistor Q2 in the state of conduction, thus ensuring electronic ballast and loaded circuit under normal condition.

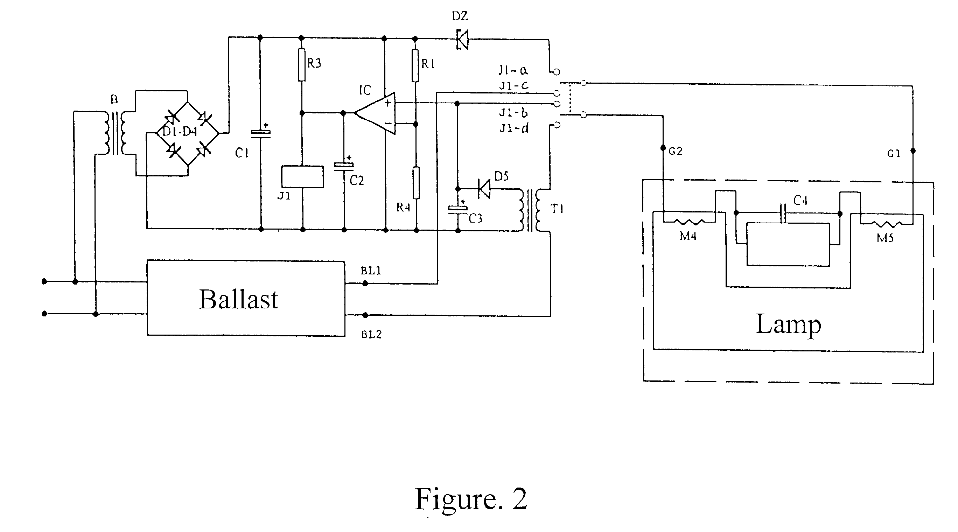

As shown in Fig. 2, separated transistors Q1, Q2 are replaced by comparator IC. Anode and cathode of comparator IC are connected to anode and cathode of direct current low voltage source respectively. Resistor R3 and relay's J1 coil are first in series and then in parallel connected between the anode and cathode of direct current low voltage source. The reference input of comparator IC connects to the series connection node Y of resistors R1, R4, and output of the induction circuit connects to the voltage sampling input terminal of comparator IC. When the power supply source is connected without the lamp in the loading circuit, primary of inductive transformer T1 has no current flowing through, and induction circuit has no output voltage. In this instance, input of reference voltage of comparator IC is higher than sampling voltage, so that output voltage is in the state of high potential, and relay J1 is closed. After the lamp is plugged into the loading circuit, the sampling voltage is higher than the reference due to that anode of direct current low voltage source goes through stabilivolt diode D2, normal-open contact J1-a of relay J1, output terminal G1 of the device, lamp filament M1, output terminal G2, normal-open contact J1-b of relay J1 to the voltage sampling input terminal of comparator IC. As a result, output voltage of comparator IC is changed from high potential to low potential, and relay J1 is released. Thus, the electronic ballast is in normal operation through the connection of output terminal BL1 of electronic ballast, the normal-close contact J1-c of relay J1, output terminal G1 of the device, lamp filament M2, resonant capacitor C4, lamp filament M1, output terminal G2 of the device, normal-close contact J1-d of relay J1, primary T1-1 of inductive transformer T1, and another output terminal BL2 of electronic ballast. In the mean time, due to current flowing through the primary T1-1 of inductive transformer T1, induction circuit produces voltage output, so that the input of voltage sampling of integrated circuit is still higher than the reference voltage, and output voltage of comparator IC keeps at low potential. Under this circumstance relay cannot be closed, thus ensuring electronic ballast under normal operation.

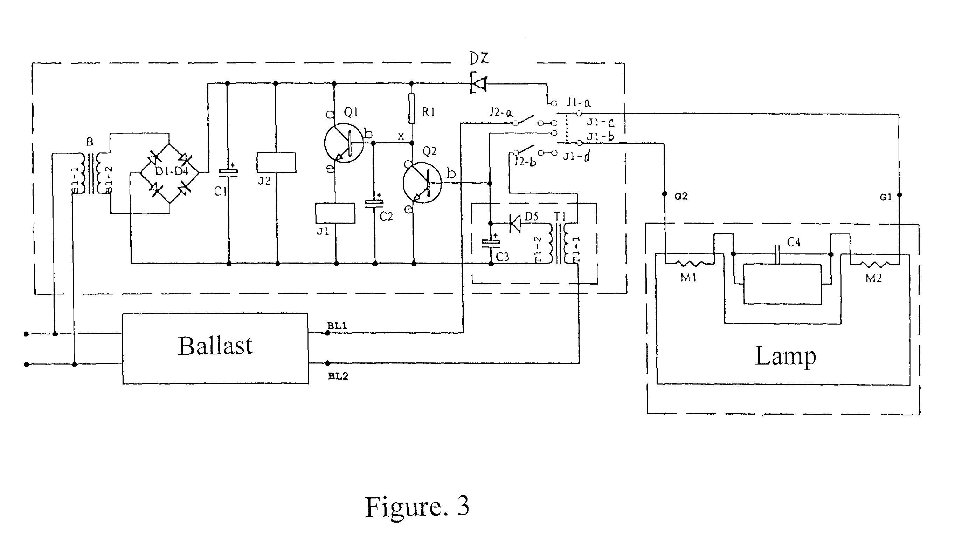

As shown in Fig. 3, coil of relay J2 is in parallel connected between the anode and cathode of low voltage direct current source, the normal-open contact J2-a thereof is connected between the normal-close contact J1-c of relay J1 and output terminal G1 of the device, and the other normal-open contact J2-b of relay J2 is connected between the normal-close contact J1-d of relay J1 and output terminal G2 of the device. The function thereof is that while power source is not available, connecting between the output terminals BL1, BL2 of electronic ballast and output terminals G1, G2 of the device is cut off by both normal-open contacts J2-a, J2-b of relay J2, thus preventing connection from neutral wire to the switch. When live wire connects to electronic ballast directly, output terminals G1, G2 of the device still have voltage higher than the safe voltage of human body.

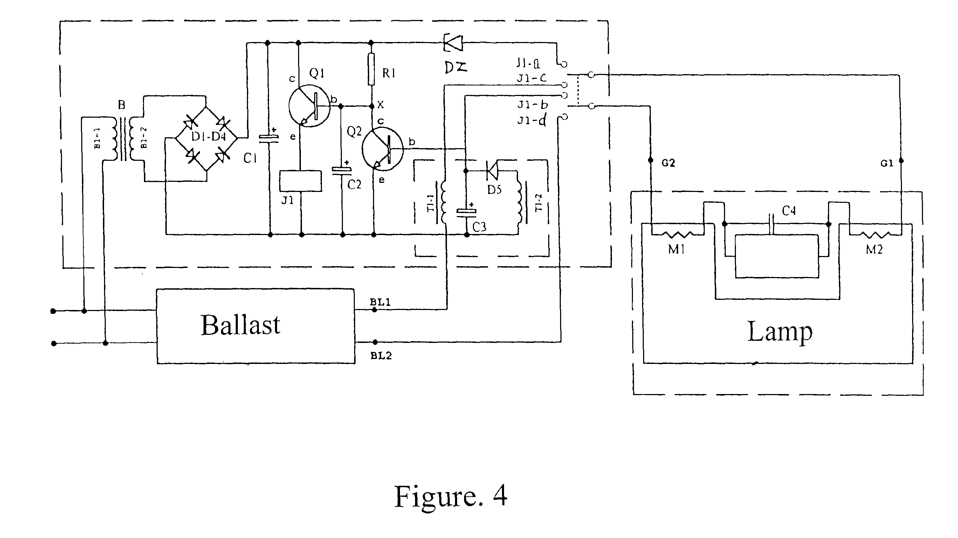

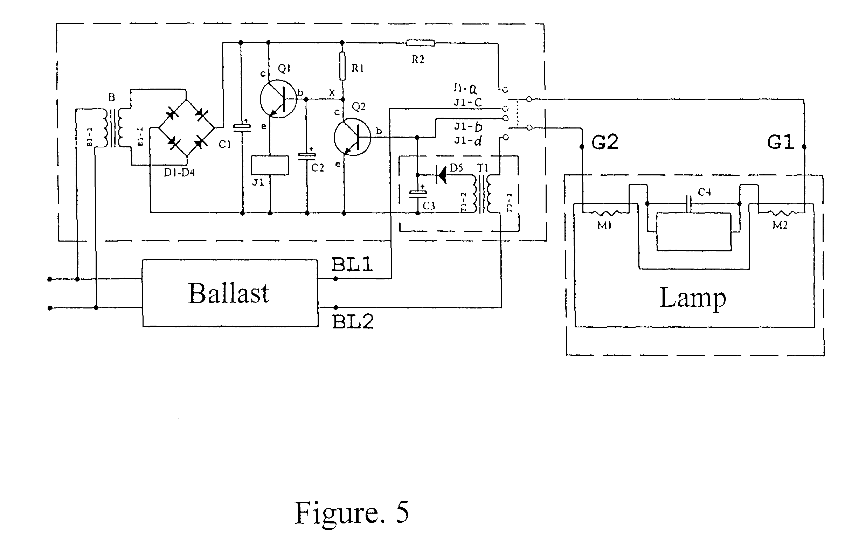

As shown in Fig. 4, primary T1-1 of inductive transformer T1 is connected between the output terminal BL1 of electronic ballast and the normal-close contact J1-c of relay J1. As shown in Fig. 5, stabilivolt DZ is replaced by voltage-dividing resistor R2. The principle of operation of the embodiments shown in Fig. 4 and 5 is same as that shown in Fig. 1.

## Claims

1. A safety output device of electronic ballast, **characterized in that** it includes an isolating transformer (B), a relay (J1), a control circuit and an induction circuit controlling relay (J1); the primary winding (B-2) of the transformer (B) connects to the input terminal of electronic ballast, the secondary winding of the transformer (B) supplies low voltage direct current source through the rectification diodes (D1-D4), electrolytic capacitor (C1), current source input terminal of the control circuit connects to anode of low voltage direct current source, output terminal of the control circuit connects to the coil of relay (J1), another side of the relay's (J1) coil connects to cathode of low voltage direct current source; input terminal of the control circuit connects to the output terminal (G2) of the device through the normal-open contact (J1-b) of relay (J1); the said induction circuit is composed of an inductive transformer (T1), diode (D5) and electrolytic capacitor (C3), one terminal of primary winding (T1-1) of the inductive transformer (T1) connects with the output terminal (G2) of the device through the normal-close contact (J1-d) of relay (J1), another terminal of primary winding (T1-1) connects to one of the output terminal of electronic ballast; one terminal of secondary winding (T1-2) of the inductive transformer (T1 ) connects to cathode of the low voltage direct current source, another terminal thereof connects to the input terminal of the control circuit through diode (D5), electrolytic capacitor (C3) is connected between the input terminal of the control circuit and cathode of low voltage direct current source; anode of low voltage direct current source connects to the output terminal (G1) of the device through the normal-open contact (J1-a) of relay (J1); the normal-close contact (J1-c) of the relay (J1) is connected between the output terminal (G1) of the device and another output terminal of electronic ballast.

2. The safety output device of electronic ballast as claimed in claim 1 wherein said control circuit controlling the relay (J1) is composed of transistors (Q1, Q2), resistor (R1) and electrolytic capacitor (C2); collector (c) of transistor (Q1) connects to anode of low voltage direct current source, emitter (e) thereof connects to the output terminal of relay's (J1) coil, resistor (R1) connects with the collector (c) of transistor (Q2), node (X) is connected with the base (b) of transistor (Q1), electrolytic capacitor (C2) is connected between the base (b) of transistor (Q1) and cathode of low voltage direct source, emitter (e) of transistor (Q2) connects to cathode of low voltage direct current source, the base (b) thereof is the output terminal of said circuit.

3. The safety output installation of electronic ballast as claimed in claim 1 wherein said control circuit controlling the relay (J1) is composed of comparator (IC), resistors (R1, R2, R3) and electrolytic capacitor (C2); anode and cathode of power source terminals of comparator (IC) are connected to anode and cathode of low voltage direct current source terminals respectively, the output terminal of comparator (IC) is the output terminal of the circuit connecting to relay's (J1) coil, output terminal of comparator (IC) connects to anode and cathode of low voltage direct current source through resistor (R3) and electrolytic capacitor (C2), resistors (R1, R4) are in series connected between anode and cathode of low voltage direct current source, voltage reference input terminal of comparator (IC) connects to node (Y); voltage sampling input terminal of comparator (IC) is the input terminal of said circuit.

4. The safety output device of electronic ballast as claimed in claim 1, 2, or 3 wherein relay (J2) is in parallel connected between the anode and cathode of low voltage direct current source, the normal-open contact (J2-a) thereof is connected between the normal-close contact (J1-c) of relay (J1) and the output terminal (G1) of the device; another normal-open contact (J2-b) of relay (J2) is connected between the normal-close contact (J1-d) of the relay (J1) and the output terminal (G2) of the device.

5. The safety output installation of electronic ballast as claimed in claim 1 wherein stabilivolt (DZ) is connected between said anode of low voltage direct current source and normal-open contact (J1-a) of relay (J1).

6. The safety output installation of electronic ballast as claimed in claim 1 wherein voltage division resistor (R2) is connected between said anode of low voltage direct current source and normal-open contact (J1-a) of relay (J1).
